# EUROPÄISCHE PATENTSCHRIFT

(11) **EP 3 569 494 B1**
(45) Veröffentlichungstag und Bekanntmachung des Hinweises auf die Patenterteilung: **28.07.2021**
(21) Anmeldenummer: 19172960.7
(22) Anmeldetag: 07.05.2019
(51) Int. Cl.: B64C 1/00, B64C 1/06, B64C 1/12, B64C 1/40

(54) **RUMPFSTRUKTUR FÜR EIN LUFTFAHRZEUG**
FUSELAGE STRUCTURE FOR AN AIRCRAFT
STRUCTURE DE FUSELAGE POUR UN AÉRONEF

(30) Priorität: 17.05.2018 DE 102018207763
(43) Veröffentlichungstag der Anmeldung: 20.11.2019
(73) Patentinhaber: Airbus Operations GmbH, 21129 Hamburg (DE)
(72) Erfinder: Heltsch, Norbert, 21129 Hamburg (DE); Linde, Peter, 21129 Hamburg (DE)

(56) Entgegenhaltungen:
- JP-A- H04 117 747
- US-A1- 2016 368 586
- US-B2- 7 025 305

## Beschreibung

Die vorliegende Erfindung betrifft eine Rumpfstruktur für ein Luftfahrzeug sowie ein Luftfahrzeug.

Rumpfstrukturen für Luftfahrzeuge sind üblicherweise aus in einer Längsrichtung verlaufenden Längsträgern, sogenannte Stringer, und in einer Umfangsrichtung verlaufenden, ringförmigen Umfangsträgern, sogenannten Spanten, zusammengesetzt. An diesem einen Innenraum des Luftfahrzeugs definierenden Grundgerüst wird typischerweise eine Außenhaut des Luftfahrzeugs befestigt. In dem Innenraum werden Kabinenbauteile, wie Böden, Kabinenmonumente und dergleichen angeordnet und mit der Rumpfstruktur verbunden.

Ferner müssen in dem Innenraum des Luftfahrzeugs häufig Funktionskomponenten, wie Klimaanlagen und die zugehörigen Leitungen sowie elektrische und hydraulische Versorgungsleitungen, untergebracht werden. Hierbei besteht ein Bedarf, diese Funktionskomponenten möglichst platzsparend in den Innenraum zu integrieren.

Die EP 2 985 232 A1 beschreibt eine Rumpfstruktur mit Spanten und Stringern, welche durch Innenverkleidungsteile verkleidet sind. Ein sich in einer Längsrichtung erstreckendes Klimarohr ist in einem Deckenbereich angeordnet und ist in die Innenverkleidungsteile integriert.

Weiter sind beispielsweise aus US 7 025 305 B2 und US 2016/368586A1 Rumpfstrukturen mit Spanten und Stringern für Luftfahrzeuge bekannt.

Es ist Aufgabe der vorliegenden Erfindung, eine verbesserte Rumpfstruktur für ein Luftfahrzeug bereitzustellen.

Diese Aufgabe wird jeweils durch den Gegenstand des unabhängigen Anspruchs gelöst.

Vorteilhafte Ausgestaltungen und Weiterbildungen ergeben sich aus den auf den unabhängigen Anspruch rückbezogenen Unteransprüchen in Verbindung mit der Beschreibung.

Nach einem Aspekt der Erfindung ist eine Rumpfstruktur für ein Luftfahrzeug vorgesehen. Die Rumpfstruktur weist eine sich in einer Umfangsrichtung erstreckende Spantstruktur mit einem ersten Anschlussabschnitt und einem entlang der Umfangsrichtung beabstandet zu dem ersten Anschlussabschnitt angeordneten zweiten Anschlussabschnitt auf. Die Spantstruktur kann also insbesondere als ein ringförmiger Träger oder Rahmen ausgebildet sein. Die Spantstruktur weist zwischen dem ersten und dem zweiten Anschlussabschnitt eine Unterbrechung bzw. Ausnehmung auf.

Die erfindungsgemäße Rumpfstruktur weist ferner eine sich zwischen dem ersten und dem zweiten Anschlussabschnitt der Spantstruktur entlang der Umfangsrichtung erstreckende und mit dem ersten und dem zweiten Anschlussabschnitt jeweils verbundene Versteifungsstruktur auf. Die Versteifungsstruktur ist also in die Unterbrechung der Spantstruktur eingesetzt bzw. setzt die Spantstruktur fort, wodurch die Spantstruktur und die Versteifungsstruktur gemeinsam einen geschlossenen Rahmen bilden.

Eine äußere Schale, beispielsweise ein Außenhautsegment, ist an einer Außenseite der Versteifungsstruktur befestigt und eine innere Schale ist an einer entgegengesetzt zu der Außenseite gelegenen Innenseite der Versteifungsstruktur befestigt. Die Versteifungsstruktur ist demnach in Bezug auf eine radiale Richtung zwischen der inneren Schale und der äußeren Schale angeordnet und mit diesen verbunden. Die innere Schale, die äußere Schale und die Versteifungsstruktur bilden folglich eine sandwichartige Struktur. Die innere Schale und die äußere Schale können auch als innere Rumpfhaut und äußere Rumpfhaut bezeichnet werden. Durch die direkte Befestigung der inneren und der äußeren Schale an der Versteifungsstruktur weist die sandwichartige Struktur vorteilhaft eine hohe mechanische Festigkeit auf.

Erfindungsgemäß weist die Versteifungsstruktur in einer quer zur Umfangsrichtung verlaufenden Längsrichtung gesehen einen profilierten Querschnitt auf und bildet gemeinsam mit der inneren Schale und der äußeren Schale mehrere in Umfangsrichtung nebeneinanderliegende Kanäle, welche sich jeweils in der Längsrichtung erstrecken. Die Versteifungsstruktur ist also insbesondere als ein flächiges Bauteil ausgebildet, das sich sowohl in der Umfangsrichtung als auch quer zu der Umfangsrichtung in der Längsrichtung erstreckt. Bei einem Schnitt in Umfangsrichtung bzw. quer zur Längsrichtung durch die Versteifungsstruktur ergibt sich ein Querschnittsverlauf, welcher in der Längsrichtung gesehen Erhöhungen und Vertiefungen ausbildet bzw. einen ondulierenden Verlauf aufweist. Diese in der Längsrichtung verlaufenden Erhöhungen und Vertiefungen definieren gemeinsam mit der inneren Schale und der äußeren Schale Kanalquerschnitte von sich in der Längsrichtung erstreckenden Kanälen.

Die auf diese Weise ausgebildeten Kanäle können insbesondere als Klimakanäle oder allgemein zur Aufnahme von Funktionskomponenten genutzt werden.

Dadurch wird eine multifunktionale Rumpfstruktur geschaffen. Da die Versteifungsstruktur zwischen den Anschlussabschnitten der Spantstruktur angeordnet ist, ergibt sich ein äußerst platzsparender Aufbau. Insbesondere können die Kanäle direkt in die Rumpfstruktur selbst integriert werden und es kann auf eine Anbringung der Kanäle als zusätzliche Komponenten an der Rumpfstruktur verzichtet werden. Durch den sandwichartigen Aufbau mit der zwischen der inneren und der äußeren Schale angeordneten Versteifungsstruktur wird außerdem die mechanische Festigkeit der Rumpfstruktur verbessert.

Gemäß einer Ausführungsform der Rumpfstruktur ist die Versteifungsstruktur derart profiliert, dass diese entlang der Umfangsrichtung abwechselnd mit der äußeren Schale und der inneren Schale verbunden ist. Die vorzugsweise als einstückige flächige Schicht mit etwa konstanter Dicke ausgebildete Versteifungsstruktur kann entlang der Umfangsrichtung also einen wellenartigen Querschnittsverlauf aufweisen, beispielsweise in Form einer Sinuswelle, einer Sägezahnwelle, einer Dreieckswelle, einer Rechteckwelle oder einer trapezförmigen Welle. Allgemein ist ein periodischer Querschnittsverlauf vorteilhaft. Dadurch sowie durch die abwechselnde Verbindung mit der inneren und der äußeren Schale wird eine Biege-und insbesondere eine Schersteifigkeit der Rumpfstruktur in Umfangsrichtung weiter verbessert Außerdem wird auf diese Weise eine beulstabile Aussteifung der äußeren und der inneren Schale erzielt.

Optional liegt die Versteifungsstruktur, die auch als Verstärkungsschicht bezeichnet werden kann, abwechselnd an der äußeren Schale und der inneren Schale an bzw. steht mit dieser in Kontakt. Dies macht den Aufbau noch kompakter und erleichtert eine direkte Kraftübertragung zwischen den Schalen und der Versteifungsstruktur.

Gemäß einer Ausführungsform ist vorgesehen, dass die äußere Schale, die innere Schale und die Versteifungsstruktur jeweils aus einem Faserverbundmaterial gebildet sind. Faserverbundmaterialien bieten den Vorteil, dass diese bezogen auf deren Gewicht eine hohe mechanische Festigkeit aufweisen. Auch bietet Faserverbundmaterial den Vorteil, dass dieses korrosionsbeständig und ermüdungsbeständig ist, sodass auf eine entsprechende Inspektion verzichtet werden kann. Dies ist insbesondere deshalb vorteilhaft, weil die im Inneren der Rumpfstruktur durch die Verstärkungsschicht und die Schalen ausgebildeten Kanäle von außen nur schwer zugänglich sind.

Optional können die äußere Schale, die innere Schale und die Versteifungsstruktur jeweils aus demselben Faserverbundmaterial gebildet sein. Dies erleichtert die insbesondere die Herstellung der Rumpfstruktur.

Weiterhin optional kann auch die Spantstruktur aus einem Faserverbundmaterial, insbesondere demselben Faserverbundmaterial wie die Versteifungsstruktur gebildet sein.

Gemäß einer Ausführungsform der Rumpfstruktur sind die äußere Schale und die innere Schale jeweils stoffschlüssig und/oder mittels Befestigungseinrichtungen mit der Versteifungsstruktur verbunden. Eine stoffschlüssige Verbindung kann beispielsweise durch Verkleben der Versteifungsstruktur mit den Schalen realisiert werden. Auch ist denkbar, die Schalen mit der Versteifungsstruktur zu verschweißen. Falls die Schalen und die Versteifungsstruktur aus einem Faserverbundmaterial gebildet sind, kann dies beispielsweise durch ein Ultraschall- oder Thermoschweißverfahren erfolgen. Alternativ oder zusätzlich oder bereichsweise kann eine Verbindung auch durch Befestigungseinrichtungen, wie z.B. Nieten, Bolzen, Schrauben, Clips oder dergleichen realisiert werden.

Gemäß einer weiteren Ausführungsform der Rumpfstruktur ist vorgesehen, dass die Versteifungsstruktur eine erste Befestigungsstruktur, welche mit dem ersten Anschlussabschnitt der Spantstruktur verbunden ist, und eine zweite Befestigungsstruktur aufweist, welche mit dem zweiten Anschlussabschnitt der Spantstruktur verbunden ist. Demnach sind also spezielle Anschlüsse an in Bezug auf die Umfangsrichtung entgegengesetzten Endabschnitten der Versteifungsstruktur vorgesehen, welche zur Verbindung mit den Anschlussabschnitten der Spantstruktur ausgebildet sind.

Die erste Befestigungsstruktur und/oder die zweite Befestigungsstruktur kann insbesondere durch eine an einem Vorsprung ausgebildete Aufnahmeausnehmung ausgebildet sein, in welcher der jeweilige Anschlussabschnitt der Spantstruktur aufgenommen ist. Demnach ist an der Versteifungsstruktur eine Backe mit einer Ausnehmung oder Nut vorgesehen, in welche der jeweilige Anschlussabschnitt eingeschoben ist. Vorzugsweise weist die Ausnehmung eine zu dem jeweiligen Anschlussabschnitt der Spantstruktur komplementär ausgebildete Querschnittsform auf. Durch die Aufnahme des Anschlussabschnitts in der Ausnehmung wird die Positionierung der Versteifungsstruktur relativ zur Spantstruktur bei der Montage vorteilhaft erleichtert.

Die erste Befestigungsstruktur und/oder die zweite Befestigungsstruktur kann auch durch einen sich in der Umfangsrichtung erstreckenden Profilträger ausgebildet sein, welcher mit dem jeweiligen Anschlussabschnitt der Spantstruktur verbunden ist. Hierbei ist die Befestigungsstruktur beispielsweise durch einen plattenförmig ausgebildeten Abschnitt gebildet, der von der Versteifungsstruktur in Umfangsrichtung vorsteht.

Optional überlappt der Profilträger mit dem jeweiligen Anschlussabschnitt der Spantstruktur in der Umfangsrichtung. Durch die Überlappung wird insbesondere die Verwindungssteifigkeit der Rumpfstruktur weiter verbessert.

Gemäß einer Ausführungsform sind die Anschlussabschnitte der Spantstruktur mit der Versteifungsstruktur jeweils stoffschlüssig und/oder mittels Befestigungseinrichtungen verbunden. Eine stoffschlüssige Verbindung kann beispielsweise durch Verkleben oder Verschweißen realisiert werden. Alternativ oder zusätzlich oder bereichsweise kann eine Verbindung auch durch Befestigungseinrichtungen, wie z.B. Nieten, Bolzen, Schrauben, Clips oder dergleichen realisiert werden.

Gemäß einer weiteren Ausführungsform ist vorgesehen, dass die äußere Schale an einer der Versteifungsstruktur zugewandten inneren Oberfläche eine Isolierschicht aufweist. Die Isolierschicht kann beispielsweise aus einer Mineralwolle gebildet sein. Die mittels der Isolierschicht erzielte thermische Isolationswirkung ist insbesondere für die Verwendung eines oder mehrerer der Kanäle als Klimakanal vorteilhaft, da dies den Aufwand für eine Auskleidung des Kanals reduziert.

Gemäß einer weiteren Ausführungsform sind an der der Versteifungsstruktur zugewandten inneren Oberfläche der äußeren Schale und/oder an einer der Versteifungsstruktur zugewandten inneren Oberfläche der inneren Schale elektrische Leiterbahnen ausgebildet. Demnach ist das elektrisch leitfähige Material der Leiterbahnen direkt auf die jeweilige Schale aufgebracht, gegebenenfalls auf einen elektrisch isolierenden Bereich bzw. auf eine Isolationsschicht. Dies spart weiteren Platz für die Verkabelung.

Gemäß einer weiteren Ausführungsform sind in den Kanälen Funktionskomponenten, insbesondere Versorgungsleitungen, wie elektrische oder hydraulische Versorgungsleitungen, angeordnet.

Gemäß einer weiteren Ausführungsform weist die Rumpfstruktur zusätzlich eine in der Längsrichtung zu der Spantstruktur beabstandete weitere Spantstruktur mit einem ersten Anschlussabschnitt und einem entlang der Umfangsrichtung beabstandet zu dem ersten Anschlussabschnitt angeordneten zweiten Anschlussabschnitt auf. Die Versteifungsstruktur erstreckt sich zwischen dem ersten und dem zweiten Anschlussabschnitt der weiteren Spantstruktur entlang der Umfangsrichtung und ist jeweils mit dem ersten und dem zweiten Anschlussabschnitt der weiteren Spantstruktur verbunden.

Gemäß einem weiteren Aspekt der Erfindung ist ein Luftfahrzeug mit einer Rumpfstruktur gemäß einer der voranstehend beschriebenen Ausführungsformen vorgesehen. Insbesondere kann es sich hierbei um ein Passagierflugzeug handeln. Die äußere Schale der Rumpfstruktur bildet hierbei vorzugsweise einen Teil einer Außenhaut des Luftfahrzeugs.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner oder gleich 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer 45 Grad, bevorzugt größer 60 Grad und insbesondere bevorzugt senkrecht zueinander verlaufen.

Hierin wird unter einem "Faserwerkstoff", einem "Fasermaterial", einem "Faserverbundmaterial" oder einem "Faserverbundwerkstoff" allgemein ein Werkstoff verstanden, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist. Der Faserwerkstoff kann insbesondere auch mit einem Harz- oder Matrixmaterial wie z.B. einem duroplastischen, thermoplastischen, elastomeren Harz oder allgemein ein Kunststoffharz oder dergleichen imprägniert sein.

Im Folgenden wird die Erfindung unter Bezugnahme auf die Figuren der Zeichnungen erläutert. Von den Figuren zeigen:
- Fig. 1: eine schematische Ansicht eines Luftfahrzeugs gemäß einem Ausführungsbeispiel der vorliegenden Erfindung in einer Draufsicht;
- Fig. 2: eine schematische Schnittansicht einer Rumpfstruktur gemäß einem Ausführungsbeispiel der vorliegenden Erfindung;
- Fig. 3: eine perspektivische Teilansicht eines Luftfahrzeugs gemäß einem Ausführungsbeispiel der vorliegenden Erfindung in einer schematischen Explosionsdarstellung;
- Fig. 4: eine abgebrochene Schnittdarstellung einer Rumpfstruktur gemäß einem Ausführungsbeispiel der vorliegenden Erfindung;
- Fig. 5: eine abgebrochene Schnittdarstellung einer Rumpfstruktur gemäß einem weiteren Ausführungsbeispiel der vorliegenden Erfindung;
- Fig. 6: eine perspektivische Teilansicht einer Rumpfstruktur gemäß einem weiteren Ausführungsbeispiel der vorliegenden Erfindung mit einer Blickrichtung auf eine innere Schale der Rumpfstruktur;
- Fig. 7: eine perspektivische Ansicht einer äußeren Schale einer Rumpfstruktur gemäß einem weiteren Ausführungsbeispiel der vorliegenden Erfindung mit einer Blickrichtung auf eine innere Oberfläche der äußeren Schale; und
- Fig. 8: eine perspektivische Teilansicht einer Rumpfstruktur gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

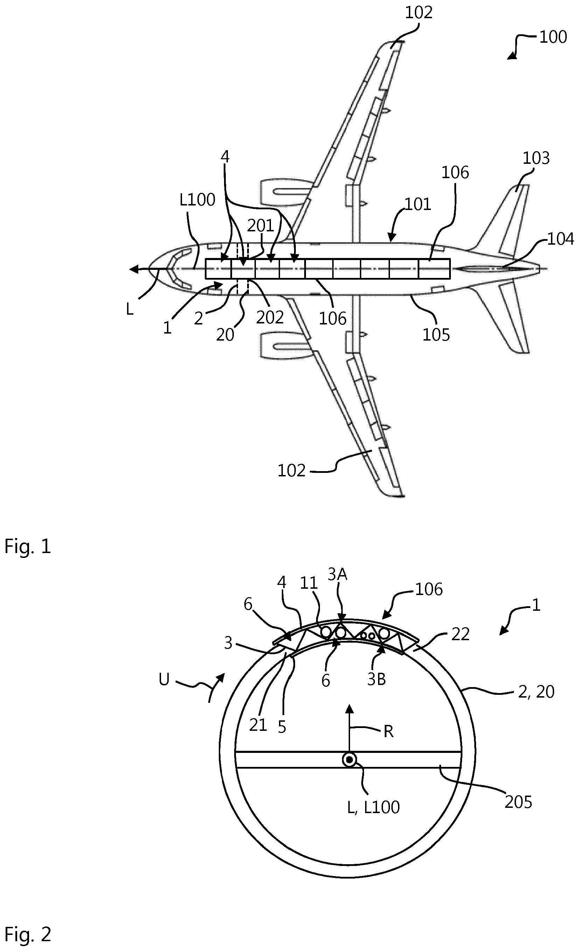

Fig. 1 zeigt eine Luftfahrzeug 100 in einer Draufsicht. Das Luftfahrzeug weist einen sich in einer Längsrichtung L erstreckenden Rumpf 101, Tragflächen 102, ein Höhenleitwerk 103 und ein Seitenleitwerk 104 auf. Der Rumpf 101 weist eine in Fig. 1 lediglich schematisch dargestellte Rumpfstruktur 1 mit mehreren Spanten 2, 20 sowie eine Außenhaut 105 auf. Wie in Fig. 1 weiterhin dargestellt, ist ein Teilbereich der Außenhaut 105 durch zumindest eine äußere Schale 4 der Rumpfstruktur 1 gebildet. In Fig. 1 ist beispielhaft dargestellt, dass eine Vielzahl von entlang der Längsrichtung L hintereinander angeordneter äußerer Schalen 4 vorgesehen ist, welche einen Teilbereich der Außenhaut 105 bilden.

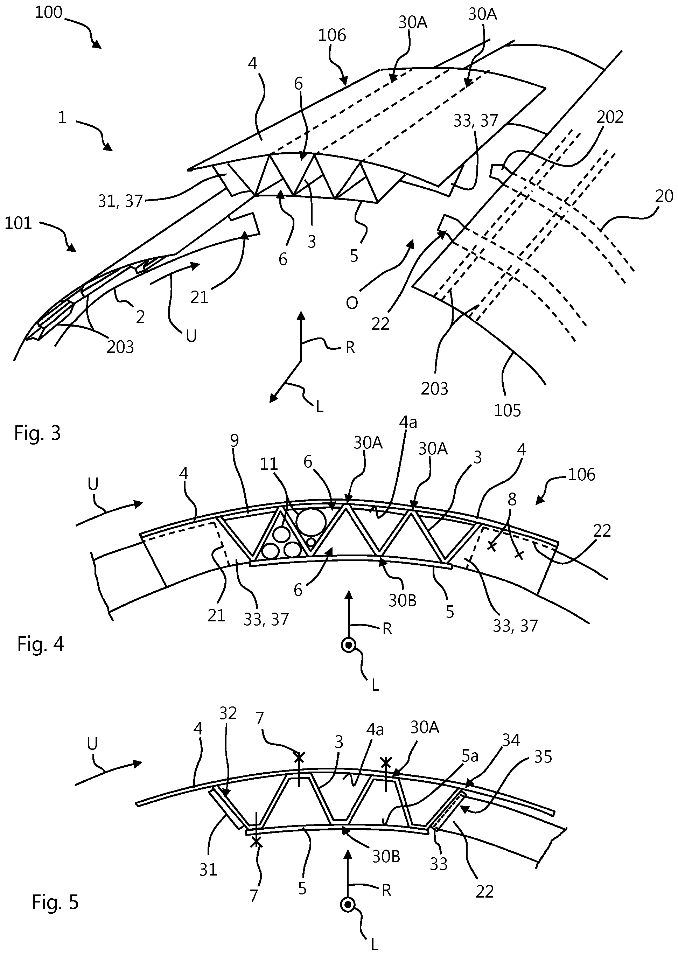

Fig. 2 zeigt beispielhaft und schematisch eine Schnittansicht der Rumpfstruktur 1. In Fig. 3 ist eine perspektivische Teilschnittansicht des Rumpfs 101 gezeigt, welcher die Rumpfstruktur 1 aufweist. Die Rumpfstruktur 1 weist eine erste Spantstruktur 2, eine oder mehrere optionale zweite Spantstrukturen 20, eine Versteifungsstruktur oder Verstärkungsschicht 3, eine äußere Schale 4 und eine innere Schale 5 auf.

Nachfolgend wird insbesondere die erste Spantstruktur 2 näher erläutert. Die Ausführungen gelten jedoch gleichermaßen auch für die optionalen weiteren Spantstrukturen 20. Wie in Fig. 2 gezeigt ist, sind die erste Spantstruktur 2 und die optionale zweite Spantstruktur 20 in der Längsrichtung L beabstandet zueinander angeordnet. Wie insbesondere in Fig. 2 beispielhaft dargestellt ist, können die Spantstrukturen 2, 20 insbesondere als Ringsegmente ausgebildet sein. Allgemein erstrecken sich die Spantstrukturen 2, 20 in einer Umfangsrichtung U und umschließen damit zumindest teilweise eine Längsachse L100 des Luftfahrzeugs, die sich entlang der Längsrichtung L erstreckt. Die Umfangsrichtung U und die Längsrichtung L erstrecken sich quer zueinander. Die Spantstruktur 2 kann beispielsweise durch einen einzigen Profilträger oder durch mehrere sich in Umfangsrichtung aneinander anschließende Profilträgersegmente zusammengesetzt sein. Die Spantstruktur 2 kann beispielsweise einen Z-förmigen oder ähnlichen Querschnitt aufweisen.

Die Spantstruktur 2 weist einen ersten Anschlussabschnitt 21 und einen zweiten Anschlussabschnitt 22 auf. Die Anschlussabschnitte 21, 22 sind zur Befestigung der Versteifungsstruktur 3 vorgesehen und bilden in Bezug auf die Umfangsrichtung U jeweils ein Ende der Spantstruktur 2. Insbesondere sind der erste und der zweite Anschlussabschnitt 21, 22 entlang der Umfangsrichtung U beabstandet zueinander angeordnet. Wie insbesondere in Fig. 3 erkennbar ist, begrenzen die Anschlussabschnitte 21, 22 der Spantstruktur 2 dadurch eine Öffnung oder Unterbrechung O der Spantstruktur 2.

Wie insbesondere in den Figuren 4 und 5 erkennbar ist, welche jeweils eine abgebrochene Schnittansicht der Rumpfstruktur 1 zeigen, ist die Versteifungsstruktur 3 in Bezug auf eine radiale Richtung R, die sich quer zur Umfangsrichtung U und quer zur Längsrichtung L erstreckt, zwischen der äußeren Schale 4 und der inneren Schale 5 angeordnet.

Die äußere und die innere Schale 4, 5 sind jeweils als sich flächig entlang der Längsrichtung L und entlang der Umfangsrichtung U erstreckende Bauteile realisiert, insbesondere als gekrümmte, entlang einander verlaufende Platten. Die Schalen 4, 5 sind optional jeweils aus einem Faserverbundmaterial gebildet.

Die Versteifungsstruktur 3 ist als eine sich flächig in der Längsrichtung L und der Umfangsrichtung U erstreckende Schicht oder Lage realisiert und weist in der Längsrichtung L gesehen einen profilierten Querschnitt auf. Insbesondere kann die Versteifungsstruktur 3 einen zickzackartigen, insbesondere Dreiecke bildenden Querschnittsverlauf entlang der Umfangsrichtung U aufweisen, wie dies beispielhaft in Fig. 4 dargestellt ist. Fig. 5 zeigt beispielhaft einen Trapeze bildenden Querschnittsverlauf entlang der Umfangsrichtung U. Selbstverständlich kann auch ein Querschnittsverlauf entlang der Umfangsrichtung U vorgesehen sein, der etwa sinuswellenförmig ist. Die Versteifungsstruktur 3 kann insbesondere aus einem Faserverbundmaterial gebildet sein. Vorzugsweise sind die Versteifungsstruktur 3 sowie die Schalen 4, 5 aus demselben Faserverbundmaterial gebildet.

Wie insbesondere in den Figuren 3 und 4 dargestellt ist, ist die Versteifungsstruktur 3 in Bezug auf die radiale Richtung R zwischen der äußeren und der inneren Schale 4, 5 angeordnet. Die äußere Schale 4 ist damit an einer Außenseite 3A der Versteifungsstruktur 3 angeordnet und insbesondere an dieser befestigt. Die innere Schale 5 ist an einer in Bezug auf die radiale Richtung R entgegengesetzt zu der Außenseite 3A gelegenen Innenseite 3B der Versteifungsstruktur 3 angeordnet und insbesondere an dieser befestigt.

Wie in den Figuren 4 und 5 gezeigt ist, bildet die Versteifungsstruktur 3 aufgrund des profilierten Querschnitts gemeinsam mit der inneren Schale 5 und der äußeren Schale 4 mehrere in Umfangsrichtung U nebeneinanderliegende Kanäle 6, welche sich jeweils in der Längsrichtung L erstrecken. Insbesondere kann die Versteifungsstruktur 3 derart profiliert sein, dass diese entlang der Umfangsrichtung U abwechselnd mit der äußeren Schale 4 und der inneren Schale 5 verbunden ist, wie dies in den Figuren 4 und 5 beispielhaft dargestellt ist. In Fig. 4 ist dies dadurch realisiert, dass die Versteifungsstruktur 3 dreieckförmig profiliert ist, in Fig. 5 durch eine trapezförmige Profilierung.

Optional kann weiterhin vorgesehen sein, dass die Versteifungsstruktur 3 entlang der Umfangsrichtung U abwechselnd an der äußeren Schale 4 und der inneren Schale 5 anliegt. Hierbei weist die Versteifungsstruktur 3 mehrere in der Umfangsrichtung U beabstandete äußere Anlagebereiche 30A auf, welche sich in der Längsrichtung L erstrecken und an der äußeren Schale 4 anliegen und mit dieser verbunden sind. Weiterhin weist die Versteifungsstruktur 3 mehrere in der Umfangsrichtung U beabstandete innere Anlagebereiche 30B auf, welche sich in der Längsrichtung L erstrecken und an der inneren Schale 5 anliegen und mit dieser verbunden sind. Wie in den Figuren 4 und 5 dargestellt, sind die inneren Anlagebereiche 30B und die äußeren Anlagebereiche 30A entlang der Umfangsrichtung U abwechselnd angeordnet.

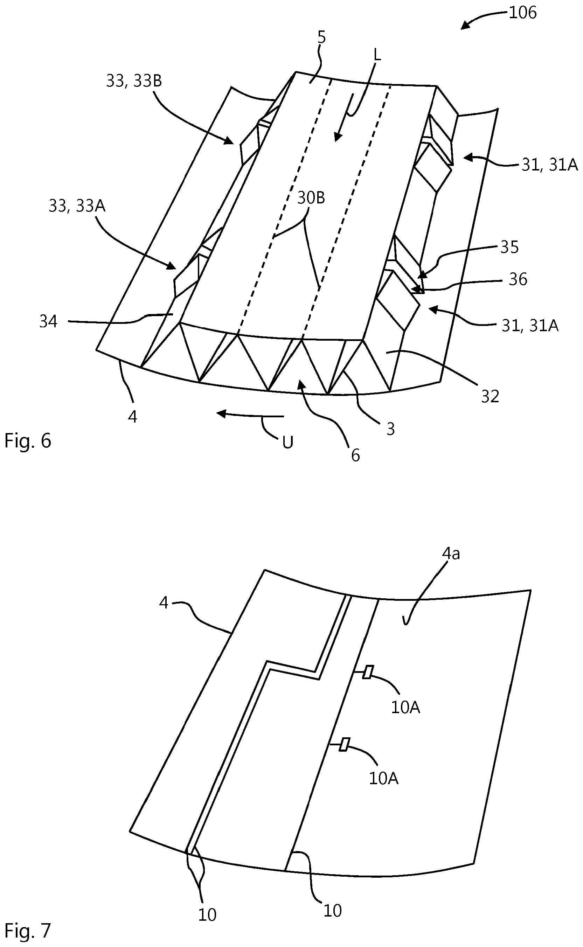

Die äußere Schale 4 und die innere Schale 5 können jeweils stoffschlüssig mit der Versteifungsstruktur 3 verbunden sein, beispielsweise durch Verschweißen entlang der optionalen Anlagebereiche 30A, 30B, wie dies in Fig. 4 und 6 symbolisch dargestellt ist. Alternativ oder zusätzlich können Befestigungseinrichtungen 7 zur Befestigung der Schalen 4, 5 an der Versteifungsstruktur 3 vorgesehen sein, z.B. in Form von Schrauben oder Nieten. Dies ist in Fig. 5 schematisch dargestellt.

Wie in Fig. 4 schematisch dargestellt ist, kann die äußere Schale 4 an einer der Versteifungsstruktur 3 zugewandten inneren Oberfläche 4a eine Isolierschicht 9, z.B in Form einer Mineralwollschicht, aufweisen. Wie in Fig. 4 beispielhaft dargestellt, ist jeweils zwischen zwei benachbarten äußeren Anlagebereichen 30A, an denen die Versteifungsstruktur 3 an der inneren Oberfläche 4a der äußeren Schale 4 anliegt, ein Abschnitt der Isolierschicht 9 vorgesehen. Optional kann auch an einer der Versteifungsstruktur 3 zugewandten inneren Oberfläche 5a der inneren Schale 5 eine Isolierschicht (nicht dargestellt) vorgesehen sein.

Wie in Fig. 7 schematisch und beispielhaft gezeigt ist, können an der inneren Oberfläche 4a der äußeren Schale 4 elektrische Leiterbahnen 10 ausgebildet sein. Wie in Fig. 7 erkennbar, lassen sich dadurch in äußerst platzsparender Weise elektrische Komponenten, wie z.B. Sensoren 10A, versorgen. Selbstverständlich können auch auf der inneren Oberfläche 5a der inneren Schale 5 elektrische Leiterbahnen (nicht dargestellt) ausgebildet sein.

Die Versteifungsstruktur 3 bildet gemeinsam mit der inneren Schale 5 und der äußeren Schale 4 ein Rumpfpanel 106.

Wie in Fig. 2 schematisch dargestellt ist, ist die Versteifungsstruktur 3 in die Unterbrechung O der Spantstruktur 2 eingesetzt. Insbesondere erstreckt sich die Versteifungsstruktur 3 entlang der Umfangsrichtung U zwischen dem ersten und dem zweiten Anschlussabschnitt 21, 22 der Spantstruktur 2. Im Falle einer optionalen weiteren Spantstruktur 20 erstreckt sich die Versteifungsstruktur 3 zwischen der ersten und der weiteren Spantstruktur 2, 20. Die Versteifungsstruktur 3 ist mit dem ersten und an dem zweiten Anschlussabschnitt 21, 22 der Spantstruktur 2 verbunden.

Zur Verbindung der Versteifungsstruktur 3 mit den Anschlussabschnitten 21, 22 der Spantstruktur 2 weist die Versteifungsstruktur 3 optional eine erste Befestigungsstruktur 31 und eine zweite Befestigungsstruktur 33 auf. Diese sind in den Figuren 4 und 5 schematisch dargestellt. Fig. 6 zeigt eine mögliche Gestaltung der der Befestigungsstrukturen 31, 33 im Detail.

Die erste Befestigungsstruktur 31 ist in Bezug auf die Umfangsrichtung U an einem ersten Endabschnitt 32 der Versteifungsstruktur 3 angeordnet und mit dem ersten Anschlussabschnitt 21 der Spantstruktur 2 verbunden. Die zweite Befestigungsstruktur 33 ist an einem in Bezug auf die Umfangsrichtung U entgegengesetzt zu dem ersten Endabschnitt 32 gelegenen zweiten Endabschnitt 34 der Versteifungsstruktur 3 angeordnet und mit dem zweiten Anschlussabschnitt 21 der Spantstruktur 2 verbunden.

Wie in den Figuren 3 und 4 beispielhaft gezeigt ist, können die erste Befestigungsstruktur 31 und die zweite Befestigungsstruktur 33 jeweils durch einen sich in der Umfangsrichtung U erstreckenden, beispielsweise plattenförmigen Profilträger 37 ausgebildet sein, welcher entlang der Umfangsrichtung U von der Versteifungsstruktur 3 vorspringt. Der jeweilige Profilträger 37 wird mit dem jeweiligen Anschlussabschnitt 21, 22 der Spantstruktur verbunden, beispielsweise stoffschlüssig und/oder mittels Befestigungseinrichtungen 8.

Wie in Fig. 4 schematisch dargestellt, kann insbesondere vorgesehen sein, dass der Profilträger 37, der die erste Befestigungsstruktur 31 bildet, mit dem ersten Anschlussabschnitt 21 und der Profilträger 37, der die zweite Befestigungsstruktur 33 bildet, mit dem zweiten Anschlussabschnitt 22 in der Umfangsrichtung U überlappt. In Fig. 4 ist beispielhaft dargestellt, dass der zweite Anschlussabschnitt 22 der Spantstruktur 2 mittels Befestigungseinrichtungen 8, z.B. in Form von Nieten, mit der zweite Befestigungsstruktur 33 verbunden ist.

Wie insbesondere in Fig. 6 beispielhaft dargestellt ist, können die erste Befestigungsstruktur 31 und die zweite Befestigungsstruktur 33 auch durch eine an einem Vorsprung 35 ausgebildete Aufnahmeausnehmung 36 ausgebildet sein. In Fig. 6 ist der Vorsprung 35 beispielhaft durch zwei beabstandete Rampen ausgebildet, zwischen welchen sich die Aufnahmeausnehmung 36 erstreckt. In Fig. 6 sind eine vordere erste Befestigungsstruktur 31A zur Verbindung mit dem ersten Anschlussabschnitt 21 der ersten Spantstruktur 2 und eine in der Längsrichtung L beabstandet zu der vorderen ersten Befestigungsstruktur 31A angeordnete hintere erste Befestigungsstruktur 31B zur Verbindung mit dem ersten Anschlussabschnitt 201 der weiteren Spantstruktur 20 vorgesehen. Ferner sind in Fig. 6 eine vordere zweite Befestigungsstruktur 33A zur Verbindung mit dem zweiten Anschlussabschnitt 22 der ersten Spantstruktur 2 und eine in der Längsrichtung L beabstandet zu der vorderen zweiten Befestigungsstruktur 33A angeordnete hintere zweite Befestigungsstruktur 33B zur Verbindung mit dem zweiten Anschlussabschnitt 202 der weiteren Spantstruktur 20 vorgesehen.

Zur Verbindung mit der Spantstruktur 2 ist der jeweilige Anschlussabschnitt 21, 22 der Spantstruktur 2 in der Aufnahmeausnehmung 36 der jeweiligen Befestigungsstruktur 31, 33 aufgenommen, wie dies in Fig. 5 beispielhaft dargestellt ist. Insbesondere kann in diesem Fall eine stoffschlüssige Verbindung vorliegen.

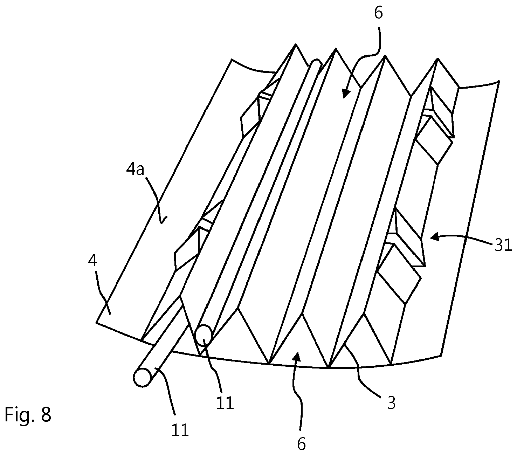

Das Rumpfpanel 106 kann beispielsweise hergestellt werden, indem zunächst die äußere Schale 4 bereitgestellt oder hergestellt wird. Optional erfolgt hierbei auch ein Aufbringen der Isolierschicht 9 und der Leiterbahnen 10, wie in Fig. 7 beispielhaft dargestellt ist. Ferner werden die Versteifungsstruktur 3 und die innere Schale 5 bereitgestellt bzw. hergestellt. Die Versteifungsstruktur 3 wird mit der inneren und der äußeren Schale 5, 4 verbunden. Beispielsweise kann die Versteifungsstruktur 3 auf die innere Oberfläche 4a der äußeren Schale 4 aufgelegt und an dieser befestigt werden, wie dies in Fig. 8 beispielhaft dargestellt ist. Anschließend kann die innere Schale 5 mit deren innerer Oberfläche 5a an der Versteifungsstruktur 3 befestigt werden, wie in Fig. 6 dargestellt. Optional können bereits vor der Anbringung der inneren Schale 5 Funktionskomponenten 11, wie Rohre oder dergleichen, in die durch den profilierten Verlauf der Versteifungsstruktur 3 definierten Kanalquerschnitte der Kanäle 6 eingelegt bzw. eingeschoben werden.

Das Rumpfpanel 106 kann beispielsweise als Oberschale des Luftfahrzeugs 100 verwendet werden, wie dies in den Figuren 1 bis 3 beispielhaft dargestellt ist. In Fig. 1 sind beispielhaft eine Vielzahl von in Längsrichtung L aneinander anschließende Rumpfpanelen 106 vorgesehen. Selbstverständlich kann auch lediglich ein einziges Rumpfpanel 106 vorgesehen sein, beispielsweise als Oberschale. Ein Vorteil des voranstehend beschriebenen Aufbaus der Rumpfstruktur 1 besteht darin, dass zunächst die Spantstrukturen 2, 20 montiert und beispielsweise durch Stringer 203 untereinander verbunden werden können, wie dies in Fig. 3 schematisch dargestellt ist. Das Rumpfpanel 106 kann dann in Bezug auf die radiale Richtung R von außen in die Unterbrechungen O der Spantstrukturen 2, 20 eingesetzt werden.

Durch die profilierte Gestaltung der Versteifungsstruktur 3 bildet diese gemeinsam mit den Schalen 4, 5 Kanäle 6 aus. In diesen können Funktionskomponenten 11, insbesondere Versorgungsleitungen angeordnet werden, wie dies in den Figuren 4 und 8 beispielhaft dargestellt ist. Diese sind damit in Bezug auf die radiale Richtung R innerhalb der Rumpfstruktur 1 untergebracht und damit äußerst platzsparend aufgenommen. Wie in Fig. 2 erkennbar ist, kann dadurch ein großer Abstand in der radialen Richtung R zwischen einem sich entlang der Längsachse L 100 erstreckenden Boden 205 und dem in Fig. 2 als Oberschale verwendeten Rumpfpanel 106 erzielt werden, der nicht durch die Kanäle 6 beeinträchtigt wird. Ein weiterer Vorteil liegt darin, dass der Rumpf 101 zunächst ohne die Oberschale 106 montiert werden kann. Dadurch kann der Boden 205 während der Montage auf einfache Weise von oben her gehalten und die Spantstruktur 2, 20 um den Boden 205 herum aufgebaut werden. Darüber hinaus können Kabinenkomponenten, wie z.B. Sitze oder dergleichen, durch die Öffnung O der Spantstruktur 2, 20 in das Rumpfinnere befördert werden.

Durch die Erstreckung der Verstärkungsschicht 3 in der Längsrichtung L wird auch eine flächige Unterstützung der äußeren Schale 4 gewährleistet, welche insbesondere einen Teil der Außenhaut 105 des Luftfahrzeugs 100 bilden kann.

### BEZUGSZEICHENLISTE

- 1: Rumpfstruktur
- 2: Spantstruktur
- 3: Versteifungsstruktur
- 3A: Außenseite der Versteifungsstruktur
- 3B: Innenseite der Versteifungsstruktur
- 4: äußere Schale
- 4a: innere Oberfläche der äußeren Schale
- 5: innere Schale
- 5a: innere Oberfläche der inneren Schale
- 6: Kanäle
- 7: Befestigungseinrichtungen
- 8: Befestigungseinrichtungen
- 9: Isolierschicht
- 10: Leiterbahnen
- 10A: Sensoren
- 11: Funktionskomponenten
- 20: weitere Spantstruktur
- 21: erster Anschlussabschnitt
- 22: zweiter Anschlussabschnitt
- 30A: äußere Anlagebereiche
- 30B: innere Anlagebereiche
- 31: erste Befestigungsstruktur
- 31A: vordere erste Befestigungsstruktur
- 32: erster Endabschnitt der Versteifungsstruktur
- 33: zweite Befestigungsstruktur
- 34: zweiter Endabschnitt der Versteifungsstruktur
- 35: Vorsprung
- 36: Aufnahmeausnehmung
- 100: Luftfahrzeug
- 101: Rumpf
- 102: Tragflächen
- 103: Höhenleitwerk
- 104: Seitenleitwerk
- 105: Außenhaut
- 106: Rumpfpanel
- 201: erster Anschlussabschnitt der weiteren Spantstruktur
- 202: zweiter Anschlussabschnitt der weiteren Spantstruktur
- 203: Stringer
- 205: Boden
- O: Unterbrechung der Spantstruktur
- U: Umfangsrichtung
- L: Längsrichtung
- L100: Längsachse des Luftfahrzeugs

## Patentansprüche

1. Rumpfstruktur (1) für ein Luftfahrzeug (100), mit:
einer sich in einer Umfangsrichtung (U) erstreckenden Spantstruktur (2), welche als ringförmiger Träger oder Rahmen mit einem ersten Anschlussabschnitt (21) und einem entlang der Umfangsrichtung (U) beabstandet zu dem ersten Anschlussabschnitt (21) angeordneten zweiten Anschlussabschnitt (22) ausgebildet ist, wobei die Spantstruktur (2) zwischen dem ersten Anschlussabschnitt (21) und dem zweiten Anschlussabschnitt (22) eine Unterbrechung (O) aufweist, welche durch die Anschlussabschnitte (21; 22) begrenzt ist;
einer sich zwischen dem ersten und dem zweiten Anschlussabschnitt (21; 22) der Spantstruktur (2) entlang der Umfangsrichtung (U) erstreckenden Versteifungsstruktur (3), welche in die Unterbrechung (O) der Spantstruktur (2) eingesetzt und mit dem ersten und dem zweiten Anschlussabschnitt (21; 22) der Spantstruktur (2) jeweils verbunden ist;
einer äußeren Schale (4), welche an einer Außenseite (3A) der Versteifungsstruktur (3) befestigt ist; und
einer inneren Schale (5), welche an einer entgegengesetzt zu der Außenseite (3A) gelegenen Innenseite (3B) der Versteifungsstruktur (3) befestigt ist,
wobei die Versteifungsstruktur (3) in einer quer zur Umfangsrichtung (U) verlaufenden Längsrichtung (L) gesehen einen profilierten Querschnitt aufweist und gemeinsam mit der inneren Schale (5) und
der äußeren Schale (4) mehrere in Umfangsrichtung (U) nebeneinanderliegende Kanäle (6) bildet, welche sich jeweils in der Längsrichtung (L) erstrecken.

2. Rumpfstruktur (1) nach Anspruch 1, wobei die Versteifungsstruktur (3) derart profiliert ist, dass diese entlang der Umfangsrichtung (U) abwechselnd mit der äußeren Schale (4) und der inneren Schale (5) verbunden ist, insbesondere abwechselnd an der äußeren Schale (4) und der inneren Schale (5) anliegt.

3. Rumpfstruktur (1) nach Anspruch 1 oder 2, wobei die äußere Schale (4), die innere Schale (5) und die Versteifungsstruktur (3) jeweils aus einem Faserverbundmaterial gebildet sind.

4. Rumpfstruktur (1) nach Anspruch 3, wobei die äußere Schale (4), die innere Schale (5) und die Versteifungsstruktur (3) jeweils aus demselben Faserverbundmaterial gebildet sind.

5. Rumpfstruktur (1) nach einem der voranstehenden Ansprüche, wobei die äußere Schale (4) und die innere Schale (5) jeweils stoffschlüssig und/oder
mittels Befestigungseinrichtungen (7) mit der Versteifungsstruktur (3) verbunden sind.

6. Rumpfstruktur (1) nach einem der voranstehenden Ansprüche, wobei die Versteifungsstruktur (3) eine erste Befestigungsstruktur (31) aufweist, die mit dem ersten Anschlussabschnitt (21) der Spantstruktur (2) verbunden ist, und eine zweite Befestigungsstruktur (33), welche mit dem zweiten Anschlussabschnitt (21) der Spantstruktur (2) verbunden ist.

7. Rumpfstruktur (1) nach Anspruch 6, wobei die erste Befestigungsstruktur (31) und/oder die zweite Befestigungsstruktur (33) als Vorsprung (35) in Form einer Backe mit einer daran ausgebildeten Aufnahmeausnehmung (36) ausgebildet ist, in welche der jeweilige Anschlussabschnitt (21; 22) der Spantstruktur (2) aufgenommen werden kann.

8. Rumpfstruktur (1) nach Anspruch 6, wobei die erste Befestigungsstruktur (31) und/oder die zweite Befestigungsstruktur (33) durch einen sich in der Umfangsrichtung (U) erstreckenden Profilträger (37) ausgebildet sind, welcher mit dem jeweiligen Anschlussabschnitt (21; 22) der Spantstruktur verbunden ist.

9. Rumpfstruktur (1) nach Anspruch 8, wobei der Profilträger (37) mit dem jeweiligen Anschlussabschnitt (21; 22) der Spantstruktur (2) in der Umfangsrichtung (U) überlappt.

10. Rumpfstruktur (1) nach einem der voranstehenden Ansprüche, wobei die Anschlussabschnitte (21; 22) der Spantstruktur (2) mit der Versteifungsstruktur (3) jeweils stoffschlüssig und/oder mittels Befestigungseinrichtungen (8) verbunden sind.

11. Rumpfstruktur (1) nach einem der voranstehenden Ansprüche, wobei die äußere Schale (4) an einer der Versteifungsstruktur (3) zugewandten inneren Oberfläche (4a) eine Isolierschicht (9) aufweist.

12. Rumpfstruktur (1) nach einem der voranstehenden Ansprüche, wobei an einer der Versteifungsstruktur (3) zugewandten inneren Oberfläche (4a) der äußeren Schale (4) und/oder an einer der Versteifungsstruktur (3) zugewandten inneren Oberfläche (5a) der inneren Schale (5) elektrische Leiterbahnen (10) ausgebildet sind.

13. Rumpfstruktur (1) nach einem der voranstehenden Ansprüche, wobei in den Kanälen (6) Funktionskomponenten (11), insbesondere Versorgungsleitungen, angeordnet sind.

14. Rumpfstruktur (1) nach einem der voranstehenden Ansprüche, zusätzlich aufweisend:
eine in der Längsrichtung (L) zu der Spantstruktur (2) beabstandete weitere Spantstruktur (20) mit einem ersten Anschlussabschnitt (201) und einem entlang der Umfangsrichtung (U) beabstandet zu dem ersten Anschlussabschnitt (201) angeordneten zweiten Anschlussabschnitt (202), wobei die Versteifungsstruktur (3) sich zwischen dem ersten und dem zweiten Anschlussabschnitt (201; 202) der weiteren Spantstruktur (20) entlang der Umfangsrichtung (U) erstreckt und mit dem ersten und dem zweiten Anschlussabschnitt (201; 202) der weiteren Spantstruktur (20) jeweils verbunden ist.

15. Luftfahrzeug (100) mit einer Rumpfstruktur (1) gemäß einem der voranstehenden Ansprüche.

## Claims

1. A fuselage structure (1) for an aircraft (100), comprising:
a frame structure (2) extending in a circumferential direction (U), said frame structure (2) being formed as an annular beam or frame having a first connection portion (21) and a second connection portion (22) spaced apart from said first connection portion (21) along said circumferential direction (U),
wherein the frame structure (2) has a gap (O) between the first connection portion (21) and the second connection portion (22), said gap (O) being limited by the connection portions (21; 22);
a stiffening structure (3) extending between the first and second connection portions (21; 22) of the frame structure (2) along the circumferential direction (U), which is inserted into the gap (O) of the frame structure (2) and is connected to the first and second connection portions (21; 22) of the frame structure (2) respectively,
an outer shell (4) fixed to an outer side (3A) of the stiffening structure (3); and
an inner shell (5) attached to an inner side (3B) of the stiffening structure (3) opposite to the outer side (3A),
wherein the stiffening structure (3) has a profiled cross-section as seen in a longitudinal direction (L) transverse to the circumferential direction (U) and forms, together with the inner shell (5) and the outer shell (4), a plurality of channels (6) arranged side by side in the circumferential direction (U) and each extending in the longitudinal direction (L).

2. Fuselage structure (1) according to claim 1, wherein the stiffening structure (3) is profiled in such a way that it is alternately connected to the outer shell (4) and the inner shell (5) along the circumferential direction (U), in particular alternately abuts the outer shell (4) and the inner shell (5).

3. Fuselage structure (1) according to claim 1 or 2, wherein the outer shell (4), the inner shell (5) and the stiffening structure (3) are each formed of a fibre composite material.

4. A fuselage structure (1) according to claim 3, wherein the outer shell (4), the inner shell (5) and the stiffening structure (3) are each formed of the same fibre composite material.

5. A fuselage structure (1) according to one of the preceding claims, wherein the outer shell (4) and the inner shell (5) are each connected to the stiffening structure (3) by means of a material bond and/or by means of fastening devices (7).

6. A fuselage structure (1) according to one of the preceding claims, wherein the stiffening structure (3) comprises a first fastening structure (31) connected to the first connection portion (21) of the frame structure (2) and a second fastening structure (33) connected to the second connection portion (21) of the frame structure (2).

7. Fuselage structure (1) according to claim 6, wherein the first fastening structure (31) and/or the second fastening structure (33) is formed as a protrusion (35) in the form of a jaw with a receiving recess (36) formed thereon, in which the respective connection portion (21; 22) of the frame structure (2) can be received.

8. Fuselage structure (1) according to claim 6, wherein the first fastening structure (31) and/or the second fastening structure (33) are formed by a profiled beam (37) extending in the circumferential direction (U), which is connected to the respective connection portion (21; 22) of the frame structure.

9. A fuselage structure (1) according to claim 8, wherein said profiled member (37) overlaps with the respective connection portion (21; 22) of the frame structure (2) in the circumferential direction (U).

10. A fuselage structure (1) according to one of the preceding claims, wherein the connection portions (21; 22) of the frame structure (2) are each connected to the stiffening structure (3) by means of a material bond and/or by means of fastening devices (8).

11. Fuselage structure (1) according to one of the preceding claims, wherein the outer shell (4) has an insulating layer (9) on an inner surface (4a) facing the stiffening structure (3).

12. Fuselage structure (1) according to one of the preceding claims, wherein electrically conducting paths (10) are formed on an inner surface (4a) of the outer shell (4) facing the stiffening structure (3) and/or on an inner surface (5a) of the inner shell (5) facing the stiffening structure (3).

13. Fuselage structure (1) according to one of the preceding claims, wherein functional components (11), in particular supply lines, are arranged in the channels (6).

14. Fuselage structure (1) according to one of the preceding claims, additionally comprising: a further frame structure (20) spaced apart from the frame structure (2) in the longitudinal direction (L) and having a first connection portion (201) and a second connection portion (202) arranged at a distance from the first connection portion (201) along the circumferential direction (U), wherein the stiffening structure (3) extends between the first and second connection portion (201; 202) of the further frame structure (20) along the circumferential direction (U) and is connected to the first and second connection portion (201; 202) of the further frame structure (20) respectively.

15. An aircraft (100) having a fuselage structure (1) according to one of the preceding claims.

## Revendications

1. Structure de fuselage (1) pour un aéronef (100), comprenant :
une structure de cadre (2) s'étendant dans une direction circonférentielle (U) et formée comme une poutre ou un cadre annulaire ayant une première partie de connexion (21) et une seconde partie de connexion (22) disposée le long de la direction circonférentielle (U) espacée de la première partie terminale (21),
la structure de cadre (2) ayant un trou (O) entre la première partie de connexion (21) et la seconde partie de connexion (22), le trou (O) étant limitée par les parties de connexion (21; 22);
une structure de raidissement (3) insérée dans le trou (O) de la structure de cadre (2) et connectée aux première et seconde parties de connexion (21; 22) de la structure de cadre (2), respectivement ; et
une coque extérieure (4) fixée à un côté extérieur (3A) de la structure de raidissement (3); et
une coque intérieure (5) fixée à un côté intérieur (3B) de la structure de raidissement (3) opposé au côté extérieur (3A),
dans laquelle la structure de raidissement (3) présente une section transversale profilée, vue dans une direction longitudinale (L) transversale à la direction circonférentielle (U), et forme, conjointement avec la coque intérieure (5) et la coque extérieure (4), une pluralité de canaux (6) juxtaposés dans la direction circonférentielle (U) et s'étendant chacun dans la direction longitudinale (L).

2. Structure de fuselage (1) selon la revendication 1, dans laquelle la structure de raidissement (3) est profilée de telle sorte qu'elle est reliée alternativement à la coque extérieure (4) et à la coque intérieure (5) le long de la direction circonférentielle (U), en particulier qu'elle vient alternativement en butée contre la coque extérieure (4) et la coque intérieure (5).

3. Structure de fuselage (1) selon la revendication 1 ou 2, dans laquelle la coque extérieure (4), la coque intérieure (5) et la structure de raidissement (3) sont chacune formées d'un matériau composite à fibres.

4. Structure de fuselage (1) selon la revendication 3, dans laquelle ladite coque extérieure (4), ladite coque intérieure (5) et ladite structure de raidissement (3) sont chacune formées du même matériau composite à fibres.

5. Structure de fuselage (1) selon l'une quelconque des revendications précédentes, dans laquelle la coque extérieure (4) et la coque intérieure (5) sont chacune reliées à la structure de raidissement (3) par une liaison de matière et/ou par des moyens de fixation (7).

6. Structure de fuselage (1) selon l'une quelconque des revendications précédentes, dans laquelle la structure de raidissement (3) comprend une première structure de fixation (31 ) reliée à la première partie de connexion (21) de la structure de cadre (2) et une deuxième structure de fixation (33) reliée à la deuxième partie de connexion (21 ) de la structure de cadre (2).

7. Structure de fuselage (1) selon la revendication 6, dans laquelle la première structure de fixation (31) et/ou la deuxième structure de fixation (33) est formée comme un épaulement (35) en forme de mâchoire avec un évidement de réception (36) formé sur celle-ci, dans lequel la partie de connexion respective (21 ; 22) de la structure de cadre (2) peut être reçue.

8. Structure de fuselage (1) selon la revendication 6, dans laquelle la première structure de fixation (31) et/ou la deuxième structure de fixation (33) sont formées par une poutre profilée (37) s'étendant dans la direction circonférentielle (U), qui est reliée à la partie de connexion respective (21 ; 22) de la structure de cadre.

9. Structure de fuselage (1) selon la revendication 8, dans laquelle la poutre profilée (37) chevauche la partie de connexion respective (21 ; 22) de la structure de cadre (2) dans la direction circonférentielle (U).

10. Structure de fuselage (1) selon l'une quelconque des revendications précédentes, dans laquelle les sections de raccordement (21 ; 22) de la structure de cadre (2) sont chacune reliées à la structure de raidissement (3) par liaison de matière et/ou au moyen de dispositifs de fixation (8).

11. Structure de fuselage (1) selon l'une quelconque des revendications précédentes, dans laquelle la coque extérieure (4) comporte une couche isolante (9) sur une surface intérieure (4a) tournée vers la structure de raidissement (3).

12. Structure de fuselage (1) selon l'une quelconque des revendications précédentes, dans laquelle des conducteurs électriques (10) sont formés sur une surface intérieure (4a) de la coque extérieure (4) tournée vers la structure de raidissement (3) et/ou sur une surface intérieure (5a) de la coque intérieure (5) tournée vers la structure de raidissement (3).

13. Structure de fuselage (1) selon l'une des revendications précédentes, dans laquelle des composants fonctionnels (11), notamment des lignes d'alimentation, sont disposés dans les canaux (6).

14. Structure de fuselage (1) selon l'une des revendications précédentes, comprenant en outre:
une autre structure de cadre (20) espacée de la structure de cadre (2) dans la direction longitudinale (L) et ayant une première partie de connexion (201) et une seconde partie de connexion (202) disposées à distance de la première partie de connexion (201) le long de la direction circonférentielle (U), dans laquelle la structure de raidissement (3) s'étend entre les première et seconde parties de connexion (201 ; 202) de l'autre structure de cadre (20) le long de la direction circonférentielle (U) et est connectée aux première et seconde parties de connexion (201 ; 202) de l'autre structure de cadre (20) respectivement.

15. Aéronef (100) comprenant une structure de fuselage (1) selon l'une quelconque des revendications précédentes.
